# EUROPÄISCHE PATENTSCHRIFT

(11) **EP 1 583 901 B1**
(45) Veröffentlichungstag und Bekanntmachung des Hinweises auf die Patenterteilung: **28.09.2011**
(21) Anmeldenummer: 04702683.6
(22) Anmeldetag: 16.01.2004
(51) Int. Cl.: F02M 59/46, F16K 1/42, F02M 63/02, F02M 61/16, F02M 61/18

(54) **VENTIL UND VERFAHREN ZUM HERSTELLEN EINES VENTILS**
VALVE AND METHOD FOR PRODUCTION OF A VALVE
SOUPAPE ET PROCEDE DE FABRICATION D'UNE SOUPAPE

(30) Priorität: 17.01.2003 DE 10301698
(43) Veröffentlichungstag der Anmeldung: 12.10.2005
(73) Patentinhaber: Continental Automotive GmbH, 30165 Hannover (DE)
(72) Erfinder: RÜBLING, Klaus, 93053 Regensburg (DE); VOIGT, Andreas, 09212 Limbach-Oberfrohna (DE)
(86) Internationale Anmeldenummer: PCT/EP2004/000321
(87) Internationale Veröffentlichungsnummer: WO 2004/065783

(56) Entgegenhaltungen:
- DE-A- 4 418 228
- GB-A- 2 033 004
- US-A- 4 531 678
- US-A- 5 593 095
- US-A- 6 047 907

## Beschreibung

Die vorliegende Erfindung betrifft ein Ventil, insbesondere für ein Speichereinspritzsystem, sowie ein entsprechendes Verfahren zur Herstellung des Ventils.

Derartige Ventile sind allgemein bekannt, wobei der Ventilschließkörper einen Durchflussquerschnitt freigibt oder verschließt. Schließkörper und Ventilsitz berühren sich in diesem Fall in einer eindeutig bestimmten Linie, wodurch ein definiertes Verhalten des Ventils gewährleistet werden kann. Solche Ventile werden u.a. bei Speichereinspritzsystemen, wie z.B. Common-Rail-Systemen eingesetzt. Anwendung finden diese Ventile z.B. bei Druckregelventilen zur Regelung des Einspritzdruckes oder bei Schaltventilen zur Steuerung der Einspritzmenge bei Einspritzventilen.

Der Ventilsitz gemäß dem Stand der Technik ist dabei entweder eben mit einer Krümmung gleich Null bei hoher Flächenpressung oder bei geringer Flächenpressung mit einer konkaven Krümmung ausgebildet, die exakt genau so groß ist wie die korrespondierend konvexe Krümmung des an den Ventilsitz gepressten Ventilschließkörpers.

Tritt ein Verschleiß am Ventilsitz auf, verändert sich der Kontaktflächenbereich und damit die Ventilcharakteristik. Somit verschlechtert sich die Qualität der Druckregelung bzw. ändern sich die Einspritzmengen. Besonders aufwendig muss der Verschleißschutz bei Dieseleinspritzsystemen gestaltet werden, da die Ventile mit dem sehr hohen Kraftstoffsystemdruck arbeiten und dadurch die Ventilbauteile sehr hohen Kräften ausgesetzt sind, insbesondere im dynamischen Betrieb.

Neben der Ventildynamik ist der Öffnungsquerschnitt, den das Ventil freigibt, der zweite wichtige funktionsbeeinflussende Parameter. Der Öffnungsquerschnitt ist durch den Durchmesser und den Ventilhub bestimmt. Der Ventilhub ist bei kraftgesteuerten Ventilen unter anderem auch von der Kraft abhängig und bei weggesteuerten Ventilen von der geometrischen Auslegung. Wenn ein Verschleiß am Ventilsitz auftritt, können sich der Durchmesser und der Hub und somit - wie oben beschrieben - die Charakteristik des Ventils ändern. Zudem kann die Dichtwirkung gemindert werden bis hin zur Fehlfunktion eines völlig offen stehenden Ventils. Die Ventilbauteile werden deshalb aus Verschleißgründen aus hochfesten teueren Materialien hergestellt bzw. mit einer Verschleißschutzschicht versehen.

Die andere Möglichkeit besteht in der Reduktion der Flächenpressung durch das Prägen des Ventilsitzes mit einer Kugel mit gleichem Durchmesser wie der Schließkörper bzw. idealer Weise mit dem Schließkörper selbst. Voraussetzung hierfür ist eine ausreichende Härte des Schließkörpers, damit an diesem keine bleibende Verformung auftritt. Die vergrößerte Kontaktfläche zwischen dem Schließkörper und dem Ventilsitz bedingt eine geringere Flächenpressung; zudem muss zwischen dem Schließkörper und dem Ventilsitz beim Schließvorgang nun mehr hydraulisches Medium verdrängt werden, was zu einem Dämpfungseffekt führt und den Verschleiß verringert. Jedoch ist wegen dem flächigen Kontakt zwischen dem Schließkörper und dem Ventilsitz der Sitzdurchmesser und somit auch die Öffnungskraft nicht genau definiert. Nachteilig bei dieser Variante ist grundsätzlich die Gefahr eines undefinierten Aufsetzens des nicht geführten Schließkörpers auf an den Grenzen des Kontaktbereiches im Ventilsitz ausgebildeten Übergangskanten. Dies kann zu Beschädigungen und einem undefinierten Schließvorgang führen. Diese Problematik wird verstärkt, wenn die Prägekugel und die Ventilschließkugel aufgrund von Fertigungstoleranzen Durchmesserunterschiede aufweisen. Ist der Durchmesser des Schließkörpers größer als der des Prägekörpers, sitzt der Schließkörper an der durchlassferneren Übergangskante auf, ist der Durchmesser kleiner, sitzt er an der durchlassnäheren Übergangskante auf.

Im Allgemeinen ist die Verschleißfestigkeit also insbesondere durch die Flächenpressung am Dichtsitz, die Materialfestigkeit und die Ventildynamik bestimmt.

Aufgabe der vorliegenden Erfindung ist es, die Verschleißfestigkeit und Dichtheit eines Sitzventils zu verbessern.

Aus US 5,593,095 ist eine Einspritzdüse für Kraftstoffinjektoren bekannt, wobei die Einspritzdüse ein Ventil mit einem Ventilsitz aufweist, dem ein Schließglied zugeordnet ist. Der Ventilsitz kann eine konische oder kave Dichtsitzfläche aufweisen. Das Schließglied weist eine konische oder konvexe Dichtsitzfläche auf. Die konvexe Dichtsitzfläche des Schließgliedes kann Teil einer mehrteiligen sphärischen Fläche sein.

Aus US 6,047,907 ist ein Kugelventil für ein Kraftstoffeinspritzventil bekannt. Das kugelförmige Schließglied ist einer konkaven oder kegelstumpfförmigen Dichtfläche des Ventils zugeordnet.

Aus GB 2 033 004 A ist ein Einspritzventil bekannt, das ein kugelförmiges Schließglied aufweist, das einem Dichtsitz zugeordnet ist. Der Dichtsitz weist einen mittleren Abschnitt auf, der am durchlassnächsten angeordnet ist, und der einen kleineren Krümmungsradius aufweist als ein zweiter Abschnitt, der durchlassferner angeordnet ist. Auf diese Weise wird eine Verschmutzung und Beeinträchtigung der Dichtfunktion vermieden.

Erfindungsgemäß ist dies bei einem Ventil mit den Merkmalen des Patentanspruches 1 erreicht, wobei der Ventilsitz in Bewegungsrichtung des Ventilschließkörpers Abschnitte mit unterschiedlicher Krümmung aufweist. Für den durchlassnächsten Abschnitt des Ventilsitzes gilt, dass die Krümmung (kV1) größer oder gleich der Krümmung (kS) des Schließgliedes ist, während für den anschließenden Abschnitt des Ventilsitzes gilt, dass die Krümmung (kV2) kleiner als die Krümmung (kS) des Schließgliedes ist. Durch die Variation des Parameters Krümmung der Dichtfläche im Ventilsitz können eine definierte Flächenpressung, ein definierter Dichtsitzdurchmesser und eine definierte Dämpfung beim Schließen des Ventils eingestellt werden. Dies gilt insbesondere selbst dann, wenn im ersten Abschnitt Verschleiß auftritt, weil dann der Schließkörper an der im Übergangsbereich zwischen dem ersten und dem zweiten Abschnitt ausgebildeten Schließkante definiert aufliegt.

Für die Herstellung der Sitzgeometrie sind mehrere Fertigungsverfahren denkbar, wobei ein Micro-Honverfahren erfindungsgemäß am günstigsten ist. Dies gilt insbesondere deshalb, weil das Oberflächengefüge der bearbeiteten Randzonen infolge der niedrigen Arbeitstemperatur nach der Bearbeitung hochbelastbar ist.

Gemäß einem bevorzugten Ausführungsbeispiel ist der Ventilsitz lediglich im ersten und zweiten Abschnitt mit dem Micro-Honverfahren hergestellt.

Nachfolgend sind der Stand der Technik sowie drei Ausführungsbeispiele des erfindungsgemäßen Ventils beschrieben. Es zeigen:
- Fig. 1: eine schematische Schnittansicht eines Ventils für einen Injektor eines Speichereinspritzsystems gemäß dem Stand der Technik,
- Fig. 2: in vergrößertem Maßstab ausschnittweise und stark vereinfacht ein Ventil gemäß dem ersten Ausfüh- rungsbeispiel,
- Fig. 3: in einer Darstellung entsprechend Fig. 2 ohne den Schließkörper ein Ventil gemäß dem zweiten Ausfüh- rungsbeispiel, sowie
- Fig. 4: in einer Darstellung entsprechend Fig. 3 ein Ventil gemäß dem dritten Ausführungsbeispiel.

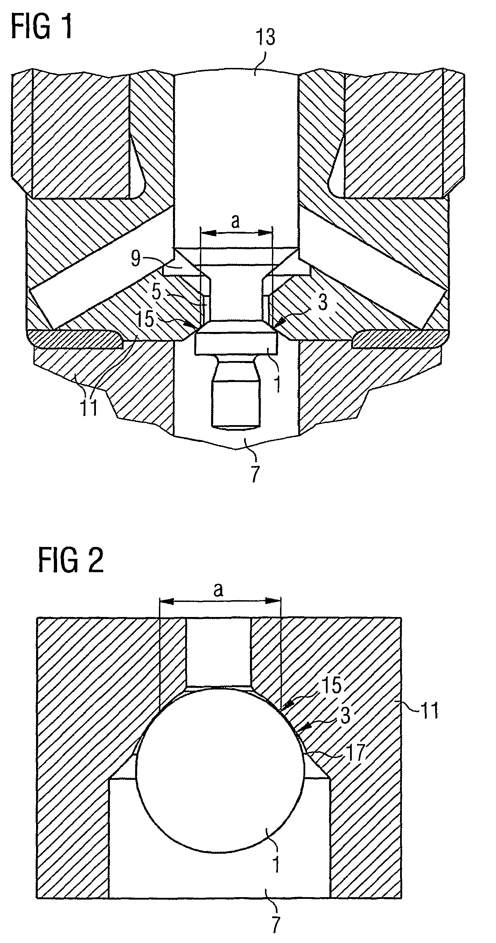

Ein Steuerventil nach Fig. 1 weist einen schließseitig konvex ausgebildeten Ventilschließkörper 1 auf, der an einem krümmungslos ausgebildeten Ventilsitz 3 einen Durchlass 5 zwischen einem Hochdruckbereich 7 und einem Niederdruckbereich 9 freigibt bzw. verschließt. Das Steuerventil ist dabei in Gehäusebauteilen 11 des Speichereinspritzsystems angeordnet. Die Bewegung des Ventilschließkörpers 1 erfolgt in an sich bekannter Weise mittels eines Aktors (nicht gezeigt), der über einen Kolben 13 auf den Ventilschließkörper 1 wirkt. Der Ventilschließkörper 1 und der Ventilsitz 3 sind in einem kreislinienförmigen Kontaktflächenbereich 15 mit einem Durchmesser a aufeinandergepresst und dichten so den Durchlass 5 ab. Zum Öffnen des Ventils muss dieses gegen die Kraft des hydraulischen Druckes (p1) im Hochdruckbereich 7 arbeiten. Eine Kraft F zum Öffnen des Ventils, die durch den Ventilkolben 13 aufgebracht wird, ergibt sich aus der Druckdifferenz von p1 und p2 (Druck im Niederdruckbereich) und der mit der Druckdifferenz belasteten senkrecht zur Öffnungsrichtung projizierten Fläche A: F = (p1-p2) x A; wobei A die Fläche des Kreises mit dem Durchmesser a ist. Die erforderliche Ventilöffnungskraft F beeinflusst die Dynamik (Öffnungs- und Schließzeiten) des Ventils maßgeblich.

Bei den in den Fig. 2 bis 4 gezeigten drei Ausführungsbeispielen werden aus Vereinfachungsgründen, soweit möglich, die selben Bezugszeichen wie beim in Fig. 1 gezeigten Stand der Technik verwendet. Die Ventilsitze werden dabei jeweils zumindest abschnittsweise mittels eines speziellen Micro-Honverfahrens insbesondere mit rotierenden Werkzeugen hergestellt. Dabei sind die Honwerkzeuge in Zusammensetzung und Härte an den zu bearbeitenden Werkstoff des Ventilsitzes angepasst. Dadurch ist zum einen ein höchstmögliches Maß an Präzision möglich. Zum anderen sind engste Maßtoleranzen und eine Oberflächenrauhtiefe von unter 0,2 µm einzuhalten. Auch ist das Oberflächengefüge der Randzonen infolge der niedrigen Arbeitstemperatur nach der Bearbeitung hochbelastbar. Derartige Micro-Honverfahren sind beispielsweise von der Fa. Thielenhaus Gmbh, Wuppertal unter der Bezeichnung Microfinish® bekannt.

Das erste Ausführungsbeispiel des Ventils gemäß Fig. 2 weist eine Sitzgeometrie mit einer im Kontaktflächenbereich 15 des Ventilsitzes 3 konkaven Ausbildung auf, die an jeder Stelle des möglichen Kontaktbereiches eine kleinere Krümmung kV im Vergleich zu der Krümmung kS des kugelförmigen Schließkörpers 1 besitzt. Die Krümmungen sind dabei so auszulegen, dass unter Berücksichtigung der auftretenden Fertigungstoleranzen ein Aufsetzen des Schließkörpers auf eine Kante 17 im Übergangsbereich zum ebenen Bereich des Ventilsitzes sicher verhindert wird. Dadurch ist der Durchmesser a für die Funktion des Ventils ausreichend genau definiert ist. Dabei kann die Krümmung bezogen auf den Kontaktflächenbereich 15 beliebig zwischen größer als Null und kleiner als die Krümmung kS des Schließkörpers 1 variieren. Offensichtlich wird die Flächenpressung um so kleiner je größer die Krümmung kV des Ventilsitzes gewählt wird. Bevorzugt gilt etwa kV < 0,9 x kS.

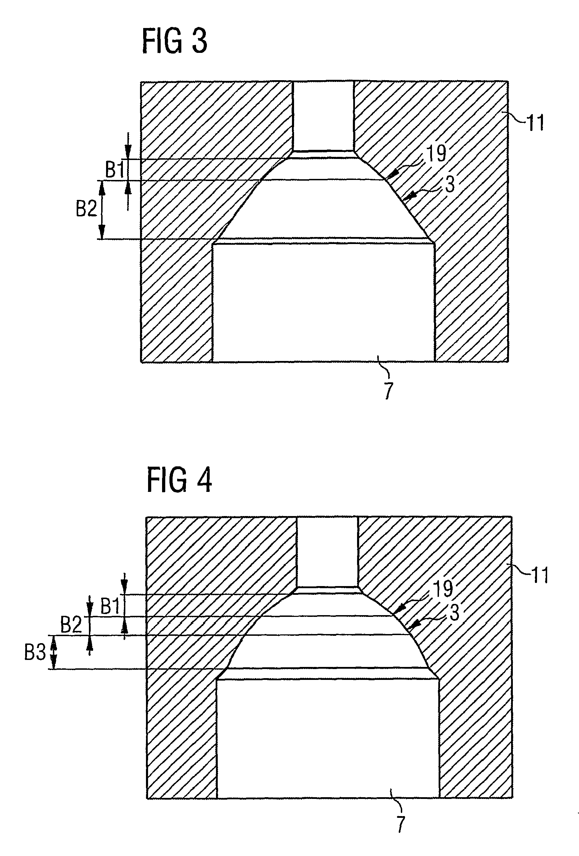

Bei dem zweiten Ausführungsbeispiel gemäß Fig. 3 weist der Ventilsitz 3 zwei Abschnitte B1, B2 mit unterschiedlichen Krümmungen kV1, kV2 auf. Der durchlassseitig ausgebildete Abschnitt B1 besitzt eine Krümmung kV1, die größer oder gleich der Krümmung kS des Schließkörpers 1 (nicht gezeigt) ist. Der sich daran anschließende Abschnitt B2 besitzt eine Krümmung kV2, die kleiner ist als die Krümmung kS des Schließkörpers 1. Die Krümmung im zweiten Abschnitt kann dabei einen konstant gleichen Wert aufweisen oder konstant von innen nach außen abnehmen. Im Übergangsbereich von dem ersten zum zweiten Abschnitt B1, B2 ist eine definierte Sitz- bzw. Schließkante 19 ausgebildet. Beim zweiten Ausführungsbeispiel können die Krümmungen des Ventilsitzes 3 im ersten Abschnitt B1 und des Ventilschließkörpers 1 möglichst exakt gleich groß gewählt werden. Dadurch ist eine optimal geringe Flächenpressung realisierbar. Selbst beim Auftreten eines Verschleißes, ist das definierte Schließverhalten des Ventils nie gefährdet, da der Schließkörper 1 dann ja an der Schließkante 19 abdichtend anliegen kann. Diese ist zudem infolge der Herstellung durch das oben beschriebene Micro-Honverfahren besonders hoch belastbar.

Beim dritten Ausführungsbeispiel gemäß Fig. 4 weist der Ventilsitz 3 drei Abschnitte B1, B2, B3 mit unterschiedlichen Krümmungen kV1, kV2, kV3 auf. Der durchlassseitig ausgebildete Abschnitt B1 besitzt eine Krümmung kV1, die kleiner oder gleich der Krümmung kS des Schließkörpers 1 ist. Der sich daran anschließende Abschnitt B2 besitzt keine Krümmung (kV2 = 0). Der dritte Abschnitt B3 weist eine Krümmung kV3 auf, die kleiner oder gleich der Krümmung kS des Schließkörpers 1 ist, und besitzt eine Führungsfunktion für den Schließkörper (nicht gezeigt).

Die Krümmung bzw. die Krümmungen des Ventilsitzes ist/sind erfindungsgemäß für jeden Anwendungsfall je nach der Funktion des Ventils gesondert auszulegen. Prinzipiell, nicht Gegenstand der Erfindung, kann auch im Unterschied zu den beschriebenen Ausführungsbeispielen an dem Schließkörper 1 die Krümmung variiert werden, um die in der Erfindung genannten Ziele zu erreichen. Vorraussetzung hierfür ist jedoch eine Führung bzw. Ausrichtung des Schließkörpers 1 im Ventilsitz 3.

## Patentansprüche

1. Ventil, insbesondere für ein Speichereinspritzsystem, zum Freigeben und Verschließen eines Durchlasses (5) an einem Ventilsitz (3), der zumindest in einem Kontaktflächenbereich (15) konkav mit einer ersten Krümmung (kV) ausgebildet ist, mittels eines Ventilschließkörpers (1), der in dem Kontaktflächenbereich (15) korrespondierend konvex mit einer zweiten Krümmung (kS) ausgebildet ist, **dadurch gekennzeichnet, dass** der Ventilsitz (3) in Bewegungsrichtung des Ventilschließkörpers (1) Abschnitte (B1, B2) mit unterschiedlicher Krümmung (kV1, kV2) aufweist, und dass die Krümmung (kV1) eines durchlassnächsten Abschnittes (B1) größer oder gleich der zweiten Krümmung (kS) ist, während die Krümmung (kV2) des anschließenden durchlassferneren Abschnittes (B2) kleiner als die zweite Krümmung (kS) ist.

2. Ventil nach Anspruch 1, **dadurch gekennzeichnet, dass** der Ventilsitz drei Abschnitte (B1, B2, B3) mit unterschiedlichen Krümmungen (kV1, kV2, kV3) aufweist.

3. Ventil nach einem der vorhergehenden Ansprüche, **dadurch gekennzeichnet, dass** die Krümmung innerhalb eines Abschnittes nicht konstant ausgebildet ist.

4. Verfahren zum Herstellen eines Ventils mit den Merkmalen des Patentanspruches 1, **dadurch gekennzeichnet, dass** die Oberfläche des Ventilsitzes zumindest im ersten Abschnitt (B1) mittels eines Micro-Honverfahrens hergestellt ist.

## Claims

1. Valve, in particular for an accumulator-type injection system, for opening and closing a passage (5) at a valve seat (3), which is of concave design with a first curvature (kV) at least in a contact surface region (15), by means of a valve closing body (1) which is of correspondingly convex design with a second curvature (kS) in the contact surface region (15), **characterized in that**, in the movement direction of the valve closing body (1), the valve seat (3) has sections (B1, B2) of different curvature (kV1, kV2), and **in that** the curvature (kV1) of a section (B1) closest to the passage is greater than or equal to the second curvature (kS), whereas the curvature (kV2) of the adjoining section (B2) further remote from the passage is smaller than the second curvature (kS).

2. Valve according to Claim 1, **characterized in that** the valve seat has three sections (B1, B2, B3) with different curvatures (kV1, kV2, kV3).

3. Valve according to one of the preceding claims, **characterized in that** the curvature is designed so as to be non-constant within a section.

4. Method for manufacturing a valve having the features of Patent Claim 1, **characterized in that** the surface of the valve seat at least in the first section (B1) is manufactured by means of a micro-honing process.

## Revendications

1. Soupape, en particulier pour système d'injection à accumulation, pour libérer et fermer un passage (5) sur un siège de soupape (3), lequel présente au moins dans une zone de surface de contact (15) sous une forme concave avec une première courbure (kV), au moyen d'un corps de fermeture de soupape (1), qui présente dans la zone de surface de contact (15)une forme convexe correspondante, avec une seconde courbure (kS), **caractérisée en ce que** le siège de soupape (3) présente dans le sens de déplacement du corps de fermeture de soupape (1) des tronçons (B1, B2) ayant des courbures différentes (kV1, kV2) et **en ce que** la courbure (kV1) d'un tronçon (B1) le plus proche du passage est supérieure ou égale à la seconde courbure (kS), tandis que la courbure (kV2) du tronçon (B2) suivant plus éloigné du passage est inférieure à la seconde courbure (kS).

2. Soupape selon la revendication 1, **caractérisée en ce que** le siège de soupape présente trois tronçons (B1, B2, B3) ayant des courbures différentes (kV1, kV2, kV3).

3. Soupape selon l'une quelconque des revendications précédentes, **caractérisée en ce que** la courbure est non constante dans un tronçon.

4. Procédé de fabrication d'une soupape ayant les caractéristiques de la revendication 1, **caractérisé en ce que** la surface du siège de soupape est fabriquée au moins dans le premier tronçon (B1) au moyen d'un procédé de micro-pierrage.
